# EUROPÄISCHE PATENTSCHRIFT

(11) **EP 3 730 500 B1**
(45) Veröffentlichungstag und Bekanntmachung des Hinweises auf die Patenterteilung: **20.12.2023**
(21) Anmeldenummer: 20165496.9
(22) Anmeldetag: 25.03.2020
(51) Int. Cl.: C07F 7/18, C08K 9/06, C08K 3/36, C08L 9/06, B60C 1/00, C08L 15/00

(54) **SILAN, KAUTSCHUKMISCHUNG ENTHALTEND DAS SILAN UND FAHRZEUGREIFEN, DER DIE KAUTSCHUKMISCHUNG IN WENIGSTENS EINEM BAUTEIL AUFWEIST SOWIE VERFAHREN ZUR HERSTELLUNG DES SILANS**
SILANE, RUBBER COMPOSITION CONTAINING THE SILANE AND VEHICLE TYRE, COMPRISING THE RUBBER MIXTURE IN AT LEAST ONE COMPONENT AND PROCESS FOR PRODUCING THE SILANE
SILANE, MÉLANGE CAOUTCHOUTEUX CONTENANT LE SILANE ET PNEU DE VÉHICULE COMPORTANT LE MÉLANGE CAOUTCHOUTEUX DANS AU MOINS UN COMPOSANT AINSI QUE PROCÉDÉ DE FABRICATION DE SILANE

(30) Priorität: 26.04.2019 DE 102019206005
(43) Veröffentlichungstag der Anmeldung: 28.10.2020
(73) Patentinhaber: Continental Reifen Deutschland GmbH, 30165 Hannover (DE)
(72) Erfinder: Dauer, David-Raphael, 30419 Hannover (DE); Strohmeier, Julian, 30419 Hannover (DE); Jacob, Andreas, 30419 Hannover (DE); Bonse, Björn, 30419 Hannover (DE); Davin, Julien, 30419 Hannover (DE); Schöffel, Julia, 30419 Hannover (DE)
(74) Vertreter: Continental Corporation

(56) Entgegenhaltungen:
- EP-A1- 2 524 923
- KR-A- 20180 000 238
- SATOSHI TANAKA: "Hydrophilic transparent antifriction acrylic polymer/metal alkoxide compositions and hydrophilic materials coated with them", JP200881658 A, 1. Januar 2008 (2008-01-01), Seiten 1-13, XP055726781, & JP 2008 081658 A (FUJIFILM CORP) 10. April 2008 (2008-04-10)
- EL HANKARI SAMIR ET AL: "Anionic surfactants as versatile soft-templates to access nanostructured ionosilicas from functional amine and ammonium precursors", MICROPOROUS AND MESOPOROUS MATERIALS, Bd. 180, 2013, Seiten 196-208, XP028700925, ISSN: 1387-1811, DOI: 10.1016/J.MICROMESO.2013.06.018

## Beschreibung

Die Erfindung betrifft ein Silan, eine Kautschukmischung enthaltend das Silan und einen Fahrzeugreifen, der die Kautschukmischung in wenigstens einem Bauteil aufweist, sowie Verfahren zur Herstellung des Silans.

Der Gegenstand der Erfindung ist in den beigefügten Patentansprüchen definiert.

Silane sind als Zuschlagstoffe für Kautschukmischungen, insbesondere für Fahrzeugreifen, bekannt, und zwar insbesondere für Kautschukmischungen, die wenigstens eine Kieselsäure als Füllstoff enthalten. Im Stand der Technik bekannte Silane gehen beispielsweise aus der DE 2536674 C3 und der DE 2255577 C3 hervor. Die Kieselsäure wird dabei mittels derartiger Silane an das oder die Polymer(e) angebunden, wodurch die Silane auch als Kupplungsagenzien bezeichnet werden. Durch die Anbindung der Kieselsäure mittels Silan-Kupplungsagenzien ergeben sich Vorteile hinsichtlich des Rollwiderstandsverhaltens und der Prozessierbarkeit der Kautschukmischung. Hierzu weist das Silan üblicherweise wenigstens eine Schwefelgruppierung auf, die an der Vulkanisation der Kautschukmischung beteiligt ist.

Prinzipiell kann unterschieden werden zwischen Silanen, die nur an Kieselsäure oder vergleichbare Füllstoffe anbinden und hierzu insbesondere wenigstens eine Silyl-Gruppe aufweisen, und Silanen, die zusätzlich zu einer Silyl-Gruppe eine reaktive SchwefelGruppierung, wie insbesondere eine Sₓ-Gruppierung (mit x > oder gleich 2) oder eine Mercapto-Gruppe S-H oder geblockte S-SG-Gruppierung aufweisen, wobei SG für eine Schutzgruppe steht, sodass das Silan durch Reaktion der Sₓ-oder S-H-Gruppierung oder der S-SG-Gruppierung nach Entfernen der Schutzgruppe bei der Schwefelvulkanisation auch an Polymere anbinden kann. Das Vorhandensein von -H oder -SG kann auch durch einen Rest R ausgedrückt werden.

Zudem gibt es im Stand der Technik Ansätze hinsichtlich bekannter Silane, die über mehrere Polymeranbindungsstellen verfügen. Derartige Silane gehen beispielsweise aus der US 7696269 B2 hervor. Die Kieselsäure wird dabei mittels derartiger Silane an das oder die Polymer(e) über mehr als eine Anbindungsstelle angebunden. Hierzu weist das Silan üblicherweise wenigstens zwei oben beschriebene reaktive Schwefel-Gruppierungen auf, die an der Vulkanisation der Kautschukmischung beteiligt sind.

Die EP 2524923 A1 offenbart eine eine Organosiliciumverbindung mit einer hydrolysierbaren Silylgruppe, Mercaptogruppe und Aminogruppe im Molekül und ihr Herstellungsverfahren und offenbart zudem ein Compoundiermittel für Kautschuk, das eine solche Organosiliciumverbindung enthält, und eine daraus herstellbare Kautschukzusammensetzung.

Der vorliegenden Erfindung liegt die Aufgabe zugrunde, ein neuartiges Silan bereitzustellen und eine Kautschukmischung mit dem Silan bereitzustellen, wodurch im Vergleich zum Stand der Technik eine weitere Verbesserung im Eigenschaftsprofil umfassend das Rollwiderstandsverhalten, das Griffverhalten (*engl.* "grip"), insbesondere Nassgriff, und die Steifigkeit und damit insbesondere die Handling-Prediktoren der Kautschukmischung, insbesondere für die Anwendung im Fahrzeugreifen, erzielt wird.

Gelöst wird die Aufgabe durch das erfindungsgemäße Silan gemäß Anspruch 1, die mit dem erfindungsgemäßen Silan modifizierte Kieselsäure, die erfindungsgemäße Kautschukmischung enthaltend das Silan sowie den erfindungsgemäßen Fahrzeugreifen, der die erfindungsgemäße Kautschukmischung in wenigstens einem Bauteil aufweist. Ferner wird die Aufgabe durch das Verfahren zur Herstellung des Silans gelöst.

Das erfindungsgemäße Silan leitet sich ab von dem nachfolgend offenbarten Silan der folgenden Formel I):

I) ((R1)ₒSi-[R²-X]ₘ-R²-)₂Y-R²-[X-R²-]ₘS-R³ ,

wobei o = 3 ist und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind oder
zwei R¹ bilden eine cyclische Dialkoxygruppe mit 2 bis 10 Kohlenstoffatomen, oder es können zwei oder mehr Silane gemäß Formel I) über Reste R¹ verbrückt sein; und
wobei die Reste R² unabhängig voneinander gleich oder verschieden sein können und ausgewählt sind aus der Gruppe bestehend aus linearen oder verzweigten Alkylengruppen mit 1 bis 20 Kohlenstoffatomen oder Cycloalkylengruppen mit 4 bis 12 Kohlenstoffatomen oder Arylengruppen mit 6 bis 20 Kohlenstoffatomen oder Alkenylengruppen mit 2 bis 20 Kohlenstoffatomen, Alkinylengruppen mit 2 bis 20 Kohlenstoffatomen oder Aralkylengruppen mit 7 bis 20 Kohlenstoffatomen; und
wobei die Gruppe R³ ein Wasserstoffatom oder eine -C(=O)-R⁴ Gruppe oder eine -SiR⁸₃-Gruppe ist, wobei R⁴ und R⁸ ausgewählt sind aus C₁-C₂₀-Alkylgruppen, C₄-C₁₀-Cycloalkylgruppen, C₆-C₂₀-Arylgruppen, C₂-C₂₀-Alkenylgruppen und C₇-C₂₀-Aralkylgruppen und R⁸ zusätzlich aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen ausgewählt ist;
und wobei Y eine zentrale zumindest trivalente Einheit darstellt, welche ausgewählt ist aus N, P, CH, SiH und B;
und wobei die m unabhängig voneinander gleich oder verschieden sein können und jedes m eine ganze Zahl von 0 bis 4 ist;
und wobei die Gruppen X unabhängig voneinander gleich oder verschieden sein können und ausgewählt sind aus den Gruppen
   -HNC(=O)-, -C(=O)NH-, -C(=O)O-, -OC(=O)-, -OC(=O)NH-,
   -HNC(=O)O-, -HNC(=O)NH-, -R⁷NC(=O)NR⁷-, -R⁷NC(=NR⁷)NR⁷-, - R⁷NC(=S)NR⁷-, wobei die Reste R⁷ innerhalb der Gruppe X gleich oder verschieden sein können und ausgewählt sind aus einem Wasserstoffatom oder ausgewählt sind aus der Gruppe bestehend aus linearen oder verzweigten Alkylgruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen unter der Bedingung, dass wenigstens ein R⁷ innerhalb der Gruppe X ein Wasserstoffatom ist,
und wobei das Silan auch in Form von Oligomeren vorliegen kann, die durch Hydrolyse und Kondensation von Silanen der Formel I) entstehen.

Im Vergleich zu aus dem Stand der Technik bekannten Silanen weist das Silan mit der Gruppe -((R¹)ₒSi-[R²-X]ₘ-R²-)₂Y- zwei füllstoffaktive Silyl-Gruppen auf.

Hierdurch wird ein neuartiges Silan bereitgestellt. Eine Kautschukmischung, die das Silan enthält, weist ein optimiertes Eigenschaftsprofil umfassend das Rollwiderstandsverhalten und die Steifigkeit auf. Die Kautschukmischung weist somit eine gewisse Verbesserung hinsichtlich des Eigenschaftsprofils umfassend Handling-Prediktoren auf und der Fahrzeugreifen zeigt u. a. ein verbessertes Handling-Verhalten.

Im Folgenden werden das Silan und dessen bevorzugte Ausführungsformen erläutert. Sämtliche Aspekte gelten auch für das Silan in der Kautschukmischung und im Fahrzeugreifen sowie für das Herstellverfahren sofern nicht ausdrücklich anders bezeichnet.

Die Begriffe "Rest" und "Gruppe" werden im Rahmen der vorliegenden Erfindung im Zusammenhang mit chemischen Formelbestandteilen synonym verwendet.

Wie in Formel I) dargestellt, handelt es sich bei dem Silan um ein geblocktes Mercaptosilan mit der Gruppierung S-R³, wobei R³ aufgrund seiner näher spezifizierten Eigenschaften ein Wasserstoffatom oder eine Schutzgruppe darstellt, sodass der Schwefel dann durch Entfernen der Schutzgruppe wie eingangs beschrieben aktiviert wird, um an einer Schwefelvulkanisation teilnehmen zu können.

Die Gruppe R³ ist ein Wasserstoffatom oder eine -C(=O)-R⁴ Gruppe oder
eine -SiR⁸₃-Gruppe, wobei R⁴ und R⁸ ausgewählt sind aus C₁-C₂₀-Alkylgruppen, C₄-C₁₀-Cycloalkylgruppen, C₆-C₂₀-Arylgruppen, C₂-C₂₀-Alkenylgruppen und C₇-C₂₀-Aralkylgruppen und R⁸ zusätzlich aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen ausgewählt ist.

Gemäß besonders vorteilhafter Ausführungsformen der Erfindung ist R³ eine -C(=O)-R⁴ Gruppe oder eine -SiR⁸₃-Gruppe, womit es sich bei dem erfindungsgemäßen Silan dieser vorteilhaften Ausführungsformen um ein geblocktes Mercaptosilan handelt. Dies hat den Vorteil, dass der Schwefel erst nach Entfernen der genannten Gruppen für R³ an chemischen Reaktionen teilnehmen kann und nicht im Vorfeld unerwünschte Nebenreaktionen auftreten. Das Silan ist damit einfacher prozessierbar, insbesondere einfacher in eine Kautschukmischung einzumischen.

Besonders bevorzugt ist die Gruppe R³ eine -C(=O)-R⁴ Gruppe, wobei R⁴ ausgewählt ist aus C₁-C₂₀-Alkylgruppen.

Dabei ist R⁴ ganz besonders bevorzugt ausgewählt aus C₁ bis C₇-Alkylgruppen, wiederum bevorzugt C₁-C₃-Alkylgruppen, insbesondere beispielsweise eine C₁-Alkylgruppe, also eine Methylgruppe.

Die Reste R¹ des erfindungsgemäßen Silans können innerhalb der Silylgruppe (R¹)ₒSi-unabhängig voneinander gleich oder verschieden voneinander sein und sind ausgewählt aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
oder
zwei R¹ bilden eine cyclische Dialkoxygruppe mit 2 bis 10 Kohlenstoffatomen,
oder es können zwei oder mehr Silane gemäß Formel I) über Reste R¹ verbrückt sein. Sämtliche genannten Reste R¹ und Verknüpfungen können innerhalb einer Silyl-Gruppe miteinander kombiniert sein.

Für den Fall, dass zwei Silane gemäß Formel I) miteinander verbrückt sind, teilen sie sich einen Rest R¹. Auf diese Weise können auch mehr als zwei Silane aneinander verknüpft sein. Im Anschluss an die Synthese des Silans gemäß Formel I) ist es somit denkbar, dass zwei Silane gemäß Formel I) über die Reste R¹ miteinander verbrückt werden. Auf diese Weise können auch mehr als zwei Silane aneinander verknüpft werden, wie beispielsweise über Dialkoxygruppen.

Das Silan kann auch Oligomere umfassen, die durch Hydrolyse und Kondensation der Silane der Formel I) entstehen. Dabei sind zum einen Oligomere von zweien oder mehreren Silanen gemäß Formel I) umfasst. Zudem sind zum anderen auch Oligomere umfasst, die durch Kondensation wenigstens eines Silans gemäß Formel I) mit wenigstens einem weiteren Silan, welches nicht Formel I) entspricht, entstehen. Bei dem "weiteren Silan" kann es sich insbesondere um dem Fachmann bekannte Silan-Kupplungsagenzien handeln.

Das Silan gemäß Formel I) umfasst gemäß vorteilhafter Ausführungsform, insbesondere zur Verwendung des Silans in einer kieselsäurehaltigen Kautschukmischung, in jeder Silylgruppe (R¹)ₒSi- wenigstens einen Rest R¹, der als Abgangsgruppe dienen kann, wie insbesondere Alkoxy-Gruppen oder sämtliche andere der genannten Gruppen, die mit einem Sauerstoffatom an das Siliciumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen oder Halogenide.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o = 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Die Reste R² des Silans können innerhalb eines Moleküls unabhängig voneinander gleich oder verschieden voneinander sein und sind ausgewählt aus der Gruppe bestehend aus linearen oder verzweigten Alkylengruppen mit 1 bis 20 Kohlenstoffatomen oder Cycloalkylengruppen mit 4 bis 12 Kohlenstoffatomen oder Arylengruppen mit 6 bis 20 Kohlenstoffatomen oder Alkenylengruppen mit 2 bis 20 Kohlenstoffatomen, Alkinylengruppen mit 2 bis 20 Kohlenstoffatomen oder Aralkylengruppen mit 7 bis 20 Kohlenstoffatomen.

Erfindungsgemäß ist, dass die Reste R² unabhängig voneinander gleich oder verschieden sind und lineare oder verzweigte Alkylenreste mit 1 bis 20 Kohlenstoffatomen, bevorzugt 1 bis 10 Kohlenstoffatomen, besonders bevorzugt 2 bis 5 Kohlenstoffatomen, insbesondere beispielsweise 2 oder 3 Kohlenstoffatomen sind.

Erfindungsgemäß ist Y ein trivalentes Stickstoffatom (N).

Erfindungsgemäß sind die Gruppen X, ausgewählt aus den Gruppen -HNC(=O)-, -C(=O)NH-, -C(=O)O-, -OC(=O)-, -OC(=O)NH-, -HNC(=O)O-, -HNC(=O)NH-,

Die Gruppen -HNC(=O)- und -C(=O)NH- sind Carbonsäureamidgruppen, wobei die beiden unterschiedlichen Schreibweisen die möglichen Konnektivitäten hinsichtlich der jeweiligen Reste R² innerhalb des Moleküls zum Ausdruck bringen sollen.

Die Gruppen -C(=O)O- und -OC(=O)- sind Estergruppen, wobei auch hier mit den beiden Schreibweisen analog zu den Säureamidgruppen die unterschiedlichen Konnektivitäten hinsichtlich der jeweiligen Reste R² gemeint sind.

Die Gruppen -OC(=O)NH- und -HNC(=O)O- sind Urethangruppen, wobei auch hier mit den beiden Schreibweisen analog zu den Säureamidgruppen die unterschiedlichen Konnektivitäten hinsichtlich der jeweiligen Reste R² gemeint sind.

Gemäß vorteilhafter Ausführungsformen der Erfindung ist X eine -OC(=O)NH- oder - HNC(=O)O-Gruppe.

Erfindungsgemäß weist das erfindungsgemäße Silan die folgende Formel II) auf:

II) ((R¹)ₒSi-R²-X-R²-)₂Y-R²-S-R³

Das Silan gemäß Formel II) stellt eine erfindungsgemäße Möglichkeit der Struktur dar.

Bevorzugt ist es, dass in Formel II) X eine -OC(=O)NH- oder -HNC(=O)O-Gruppe ist. Erfindungsgemäß ist, dass Y in Formel II) ein trivalentes Stickstoffatom (N) ist.

Eine besonders bevorzugte Ausführungsform der Formel II) ist das Silan der Formel II)-a): II)-a) ((R¹)ₒSi-R²-(H)NC(=O)O-R²)₂-N-R²-S-R³ .

In einer besonders bevorzugten und beispielhaften Ausführungsform der Erfindung weist das erfindungsgemäße Silan die folgende Formel III) auf:

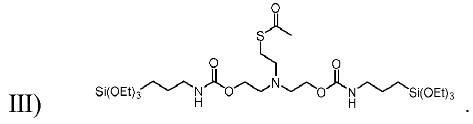

Das Silan gemäß Formel III) ist ein Beispiel für die Struktur II)-a), welches ein Beispiel für die allgemeinere Struktur II) ist, welche eine mögliche Struktur von Formel I) ist.

Ein weiterer Gegenstand der vorliegenden Erfindung ist ein Verfahren zur Herstellung des erfindungsgemäßen Silans gemäß Formel II)-a) als Beispiel für II), wobei X in Formel II) eine HNC(=O)O-Gruppe und Y ein trivalentes Stickstoffatom ist.

II)-a) ((R¹)ₒSi-R²-(H)NC(=O)O-R²)₂-N-R²-S-R³ .

Das erfindungsgemäße Verfahren gemäß dieser Ausführungsform umfasst wenigstens die folgenden Verfahrensschritte:
a) Bereitstellung einer Substanz (R¹)ₒSi-R²-N=C=O ;
b) Bereitstellung einer Substanz (HO-R²)₃N ;
c) Umsetzung von zwei Äquivalenten der Substanz aus Schritt a) mit der Substanz aus Schritt b) zu

   ((R¹)ₒSi-R²-(H)NC(=O)O-R²-)₂N-R²-OH
d) Bereitstellung einer Substanz R³-SH ;
e) Umsetzung von einem Äquivalent der Substanz aus Schritt c) mit einem Äquivalent der Substanz aus Schritt d) zu

   II)-a) ((R¹)ₒSi-R²-(H)NC(=O)O-R²)₂-N-R²-S-R³
f) Optional Aufreinigung des in Schritt e) erhaltenen Silans.

Für die Reste R¹, R², R³ und den Index o gelten die obigen Ausführungen sofern nicht ausdrücklich anders angegeben.

Beispielsweise kann das Silan gemäß Formel III) auf die beschriebene Weise gemäß Verfahren hergestellt werden.

Die Substanzen gemäß Schritt a) und b) und d) können kommerziell erworben und bereitgestellt werden.

Die Umsetzung gemäß Schritt c) erfolgt bevorzugt in einem organischen Lösungsmittel, wie beispielsweise Tetrahydrofuran (THF) , Dimethylformamid (DMF) oder Dimethylsulfoxid (DMSO), bevorzugt THF.

Bevorzugt findet die Reaktion gemäß Schritt c) unter Schutzgasatmosphäre, wie beispielsweise unter Argon, und bei Raumtemperatur (RT) statt.

Das Reaktionsgemisch wird bevorzugt über mehrere Stunden, beispielsweise 2 bis 12 Stunden, gerührt.

Bevorzugt wird vor der weiteren Umsetzung gemäß Schritt e) das Produkt nach Schritt c) aufgereinigt.

Die Umsetzung gemäß Schritt e) erfolgt bevorzugt in einem organischen Lösungsmittel, wie insbesondere Tetrahydrofuran (THF) und wird bevorzugt als Mitsunobu-Reaktion durchgeführt.

Hierbei werden bevorzugt zunächst die in Schritt c) erhaltene Substanz bei 0 °C unter Schutzgasatmosphäre mit Triphenylphosphin (PPh₃) und Diisopropylazodicarboxylat (DIAD) oder Diethylazodicarboxylat (DEAD) oder Tetramethylazodicarboxamid (TMAD) in THF versetzt und anschließend die Substanz gemäß Schritt d) zugegeben. Erst hiernach wird bevorzugt auf Raumtemperatur erwärmt.

Das Reaktionsgemisch wird bevorzugt über mehrere Stunden, beispielsweise 2 bis 12 Stunden, gerührt.

Gemäß Verfahrensschritt f) erfolgt optional die Aufreinigung des in Schritt e) erhaltenen Silans, wobei sich die Art der Aufreinigung danach bestimmt, in welchem Aggregatzustand das Silan anfällt.

Es ist aber auch denkbar, das hergestellte Silan ohne einen Aufreinigungsschritt weiter zu verwenden, wie beispielsweise auf Kieselsäure aufzuziehen, wie unten beschrieben.

Ein weiterer Gegenstand der vorliegenden Erfindung ist eine Kieselsäure, die mit wenigstens einem erfindungsgemäßen Silan zumindest an deren Oberfläche modifiziert ist. Beispielsweise erfolgt die Modifizierung durch wenigstens folgende Verfahrensschritte:
g) Optional Lösen des erfindungsgemäßen Silans aus Schritt e) oder f) in einem organischen Lösungsmittel;
h) Inkontaktbringen wenigstens einer Kieselsäure mit dem Silan aus Schritt e) oder f) oder mit der Lösung aus Schritt g) und anschließendes Rühren der entstandenen Suspension, bevorzugt für 30 Minuten bis 18 Stunden;
i) Trocknen der erhaltenen modifizierten Kieselsäure.

Bei der Kieselsäure kann es sich um jegliche dem Fachmann bekannte Kieselsäure handeln, wie insbesondere die unten näher aufgeführten Kieselsäuretypen.

Diese weiteren Verfahrensschritte stellen eine Modifizierung von Kieselsäure mit dem erfindungsgemäß hergestellten Silan dar und sind ein weiterer Aspekt der vorliegenden Erfindung.

Die erfindungsgemäße Kautschukmischung enthält wenigstens ein erfindungsgemäßes Silan gemäß Formel II). Es ist prinzipiell denkbar, dass die Kautschukmischung mehrere erfindungsgemäße Silane unterschiedlicher Ausführungsformen, also mit ggf. unterschiedlichen Gruppen X, sowie R¹, R² und R³ im Gemisch enthält. Insbesondere kann die Kautschukmischung auch ein Gemisch zweier oder mehrerer Silane I) oder II) oder II)-a) oder III) enthalten. Die Kautschukmischung kann das erfindungsgemäße Silan gemäß den gezeigten Formeln II) oder II)-a) oder III) auch in Kombination mit anderen im Stand der Technik bekannten Silanen enthalten, ggf. als Oligomere, wie oben beschrieben.

Solche aus dem Stand der Technik bekannten Kupplungsagenzien sind insbesondere und beispielsweise bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Im Stand der Technik bekannt ist auch ein Silan-Gemisch, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266^{®} der Firma Evonik erhältlich, welches z.B. in der DE 102006004062 A1 beschrieben ist.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.

Erfindungsgemäß enthält die Kautschukmischung das Silan gemäß Formel II).

Gemäß einer besonders vorteilhaften Ausführungsform der Erfindung enthält die Kautschukmischung das Silan gemäß Formel II)-a).

Gemäß einer besonders vorteilhaften Ausführungsform der Erfindung enthält die Kautschukmischung das Silan gemäß Formel III).

Bei der erfindungsgemäßen Kautschukmischung handelt es sich bevorzugt um eine Kautschukmischung, die für den Einsatz in Fahrzeugreifen geeignet ist und hierzu bevorzugt wenigstens einen Dienkautschuk enthält.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß einer bevorzugten Weiterbildung der Erfindung werden in der Kautschukmischung wenigstens zwei verschiedene Dienkautschuk-Typen eingesetzt.

Die erfindungsgemäße Kautschukmischung enthält als Füllstoff bevorzugt wenigstens eine Kieselsäure, wodurch die Vorteile des erfindungsgemäßen Silans besonders hervortreten.

Wird das wenigstens eine erfindungsgemäße Silan der erfindungsgemäßen Kautschukmischung auf einer Kieselsäure aufgezogen zugegeben, so kann die Kautschukmischung weitere Kieselsäuren enthalten.

Die Begriffe "Kieselsäure" und "Silika" werden im Rahmen der vorliegenden Erfindung synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 100 bis 235 m²/g, und eine CTAB-Oberfläche (gemäß ASTM D 3765) von 30 bis 400 m²/g, bevorzugt von 30 bis 330 m²/g, besonders bevorzugt von 95 bis 300 m²/g und ganz besonders bevorzugt von 95 bis 200 m²/g, aufweist. Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay).

Die Menge der wenigstens einen Kieselsäure beträgt dabei bevorzugt 5 bis 300 phr, besonders bevorzugt 10 bis 200 phr, ganz besonders bevorzugt 20 bis 180 phr. Im Falle unterschiedlicher Kieselsäuren ist mit den angegebenen Mengen die Gesamtmenge an enthaltenen Kieselsäuren gemeint.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Mw größer als 20.000 g/mol) und dadurch festen Kautschuke bezogen.

Die in dieser Schrift verwendete Angabe phf (parts per hundred parts of filler by weight) ist die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Bevorzugt enthält die erfindungsgemäße Kautschukmischung wenigstens ein Silan der Formel I), nämlich wenigstens das Silan gemäß Formel II) oder II)-a) oder III), in einer Menge von 1 bis 25 phr und im bevorzugten Fall mit Kieselsäure als Füllstoff bevorzugt 2 bis 20 phf.

Das oder die erfindungsgemäßen Silane werden bei der Herstellung der erfindungsgemäßen Kautschukmischung bevorzugt in wenigstens einer Grundmischstufe zugegeben, die bevorzugt wenigstens einen Dienkautschuk und bevorzugt wenigstens eine Kieselsäure als Füllstoff enthält.

Ein weiterer Gegenstand der vorliegenden Erfindung ist somit ein Verfahren zur Herstellung der erfindungsgemäßen Kautschukmischung, wobei wenigstens ein erfindungsgemäßes Silan wie vorstehend beschrieben bevorzugt in wenigstens einer Grundmischstufe zugegeben wird.

Gemäß einer vorteilhaften Ausführungsform der Erfindung wird das wenigstens eine erfindungsgemäße Silan zuvor auf Kieselsäure aufgezogen und in dieser Form in die Kautschukmischung eingemischt.

Bei dem erfindungsgemäßen Verfahren zur Herstellung der erfindungsgemäßen Kautschukmischung ist es somit bevorzugt, wenn das wenigstens eine erfindungsgemäße Silan zuvor auf Kieselsäure aufgezogen und in dieser Form in die Kautschukmischung eingemischt wird.

Die Kautschukgrundmischung enthaltend wenigstens ein erfindungsgemäßes Silan und/oder eine erfindungsgemäße Kieselsäure wird anschließend durch Zugabe von Vulkanisationschemikalien, s. unten insbesondere ein Schwefelvulkanisationssystem, zu einer Kautschukfertigmischung verarbeitet und im Anschluss vulkanisiert, wodurch ein erfindungsgemäßes Vulkanisat der erfindungsgemäßen Kautschukmischung erhalten wird.

Weitere Aspekte der vorliegenden Erfindung sind die Herstellung einer Kautschukgrundmischung enthaltend wenigstens ein erfindungsgemäßes Silan und/oder eine erfindungsgemäße Kieselsäure, sowie die Herstellung einer Kautschukfertigmischung enthaltend wenigstens ein erfindungsgemäßes Silan und/oder eine erfindungsgemäße Kieselsäure, sowie die Herstellung eines erfindungsgemäßen Vulkanisates der erfindungsgemäßen Kautschukmischung.

Die erfindungsgemäße Kautschukmischung kann Ruß als weiteren Füllstoff enthalten, und zwar bevorzugt in Mengen von 2 bis 200 phr, besonders bevorzugt 2 bis 70 phr.

Die erfindungsgemäße Kautschukmischung kann, bevorzugt möglichst geringe Mengen d.h. bevorzugt 0 bis 3 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filier".

Zinkoxid gehört im Rahmen der vorliegenden Erfindung nicht zu den Füllstoffen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Ozonschutzwachse,
d) Harze, insbesondere Klebharze für innere Reifenbauteile,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher, wie insbesondere wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt, wobei Mineralöle als Weichmacher besonders bevorzugt sind.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der Mengenanteil der Gesamtmenge an weiteren Zusatzstoffen beträgt bevorzugt 3 bis 150 phr, besonders bevorzugt 3 bis 100 phr und ganz besonders bevorzugt 5 bis 80 phr.

Im Gesamtmengenanteil der weiteren Zusatzstoffe kann Zinkoxid (ZnO) in den oben genannten Mengen enthalten sein.

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) oder eines Guanidin-Beschleunigers wie Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit CapBase-Konstruktion. Die Cap ist hierbei der Teil des Laufstreifens des Fahrzeugreifens, der mit der Fahrbahn in Berührung kommt, während die Base der radial darunter befindliche innere Teil des Laufstreifens ist, der nicht mit der Fahrbahn in Berührung kommt.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die inneren Bauteile eines Reifen bezeichnet, wie im Wesentlichen Squeegee, Innenseele (Innenschicht), Kernprofil, Gürtel, Schulter, Gürtelprofil, Karkasse, Wulstverstärker, Wulstprofil, Hornprofil und Bandage. Der noch unvulkanisierte Reifenrohling wird anschließend vulkanisiert.

Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Ein weiterer Gegenstand der vorliegenden Erfindung ist ein Fahrzeugreifen, der die erfindungsgemäße Kautschukmischung enthaltend wenigstens ein erfindungsgemäßes Silan in wenigstens einem Bauteil aufweist.

Der vulkanisierte Fahrzeugreifen weist wenigstens in einem Bauteil ein Vulkanisat wenigstens einer erfindungsgemäßen Kautschukmischung auf. Dem Fachmann ist bekannt, dass die meisten Substanzen, wie z. B. die enthaltenen Kautschuke und Silane, insbesondere das erfindungsgemäße Silan, entweder bereits nach dem Mischen oder erst nach der Vulkanisation in chemisch veränderter Form vorliegen.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt weist der erfindungsgemäße Fahrzeugreifen die erfindungsgemäße Kautschukmischung wenigstens im Laufstreifen auf.

Bevorzugt weist der erfindungsgemäße Fahrzeugreifen die erfindungsgemäße Kautschukmischung wenigstens in der Seitenwand auf.

Die erfindungsgemäße Kautschukmischung ist ferner auch für andere Bauteile von Fahrzeugreifen geeignet, wie z. B. insbesondere dem, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden soll die Erfindung anhand von Ausführungsbeispielen näher erläutert werden.

Das Silan gemäß Formel III) als erfindungsgemäßes Beispiel wurde auf folgende Weise hergestellt:

### 1. Herstellung von (2-hydroxyethyl)amino)-bis-(ethyl-(3-(triethoxysilyl)propyl)-carbamat gemäß Formel IV)

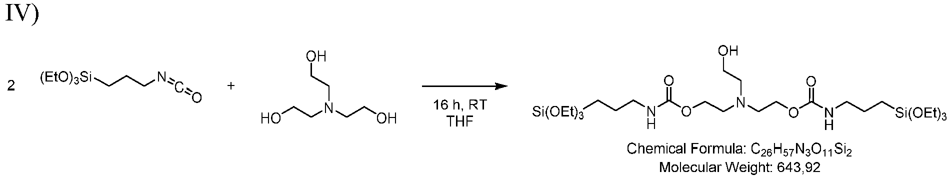

Zu einer Lösung von Triethanolamin (2.50 g, 16.8 mmol, 1.0 Äq.) in THF (20 mL) wurde bei RT unter Argonatmosphäre tropfenweise über 30 min. eine Lösung von Triethoxypropylisocyanat (8.3 mL, 8.29 g, 33.5 mmol, 2.0 Äq.) in THF (30 mL) gegeben. Anschließend wurde das Reaktionsgemisch über Nacht bei RT gerührt und das Lösungmittel unter vermindertem Druck entfernt.

Nach säulenchromatographischer Aufreinigung an Kieselgel (80 g, DCM/MeOH 5 % → 20 %) konnte die Zielverbindung als farblose Flüssigkeit (3.00 g, 4.7 mmol, 28 %) isoliert werden.

¹H-NMR (*engl.* "nuclear magnetic resonance") (500 MHz, DMSO-*d*₆) δ 7.07 (t, *J* = 5.7 Hz, 2 H, -OC(O)NH-), 4.28 (t, *J* = 5.4 Hz, 1 H, -OH), 3.95 (t, *J* = 6.2 Hz, 4 H, -CH₂OC(O)NH-), 3.74 (q, *J* = 7.0 Hz, 12 H, SiOCH₂CH₃), 3.42 (q, *J* = 6.3 Hz, 2 H, -CH₂OH), 2.93 (q, *J* = 7.0 Hz, 4 H, -OC(O)NHCH₂-), 2.70 (t, *J* = 6.3 Hz, 4 H, -NCH₂CH₂OC(O)NH-), 2.59 (t, *J* = 6.4 Hz, 2 H, -NCH₂CH₂OH), 1.49 - 1.39 (m, 4 H, -SiCH₂CH₂CH₂-), 1.15 (t, *J* = 7.0 Hz, 18 H, -SiOCH₂CH₃), 0.56 - 0.47 (m, 4 H, -SiCH₂CH₂CH₂-).

### 2. Herstellung des Silans gemäß Formel III) (2-thioacelyl-ethyl)amino)-bis-(ethyl-(3-(triethoxysilyl)propyl)-carbamat) nach dem Syntheseschema gemäß Formel V)

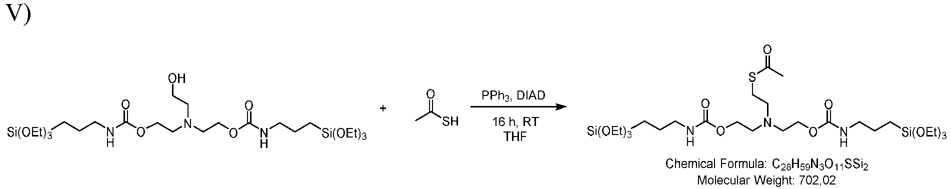

Zu einer Lösung von (2-hydroxyethyl)amino)-bis-(ethyl-(3-(triethoxysilyl)propyl)-carbamat) (2.00 g, 3.1 mmol, 1.0 Äq.) in THF (20 mL) wurde bei 0 °C unter Argonatmosphäre Triphenylphosphin (0.90 g, 3.4 mmol, 1.1 Äq.) und Azodicarbonsäurediisopropylester (DIAD) (0.7 mL, 0.69 g, 3.4 mmol, 1.1 Äq.) gegeben. Anschließend wurde bei 0 °C Thioessigsäure (0.3 mL, 0.26 g, 3.4 mmol, 1.1 Äq.) über einen Zeitraum von 5 min. zum Reaktionsgemisch getropft. Das Reaktionsgemisch wurde auf RT erwärmt und über Nacht bei RT gerührt. Anschließend wurde das Lösungsmittel unter vermindertem Druck entfernt und der Rückstand in Cyclohexan (20 mL) aufgenommen, wobei sich ein weißer Niederschlag bildete. Der entstandene kristalline Feststoff wurde mittels Filtration abgetrennt und das Lösungsmittel des Filtrats wurde unter vermindertem Druck entfernt.

Nach säulenchromatographischer Aufreinigung an Kieselgel (120 g, Cyclohexan/Ethylacetat 0 % → 60 %) konnte die Zielverbindung als gelbes Öl (1.15 g, 1.6 mmol, 53 %) isoliert werden.

¹H-NMR (500 MHz, DMSO-*d*₆) δ 7.07 (t, *J* = 5.8 Hz, 2 H, -OC(O)NH-), 3.95 (t, *J* = 6.2 Hz, 4 H, -CH₂OC(O)NH-), 3.74 (q, *J* = 7.0 Hz, 12 H, -SiOCH₂CH₃), 2.97 - 2.91 (m, 4 H, -OC(O)NHCH₂-), 2.91 - 2.86 (m, 2 H, -CH₂SC(O)CH₃), 2.71 (t, *J*= 6.2 Hz, 4 H, -NCH₂CH₂OC(O)NH-), 2.67 - 2.61 (m, 2 H, -NCH₂CH₂S-), 2.32 (s, 3 H, -SC(O)CH₃), 1.49 - 1.40 (m, 4 H, -SiCH₂CH₂CH₂-), 1.15 (t, *J* = 7.0 Hz, 18 H, -SiOCH₂CH₃), 0.56 - 0.47 (m, 4 H, -SiCH₂CH₂CH₂-).

¹³C-NMR (126 MHz, DMSO-*d*₆) δ 195.41, 156.09, 61.83, 57.65, 53.81, 52.54, 42.94, 30.50, 26.57, 22.96, 18.16, 7.14.

Elementar Analyse (%) (berechnet): C, 46.79 (47.91); H, 8.34 (8.47); N, 6.02 (5.99); S, 4.53 (4.57).

ESI-MS (Elektrosprayionisation Massenspektrometrie) *m*/*z* (%): 702.7 [M+H]⁺ (100), 419.1 [M+Na]⁺ (11); 746.6 [M+HC(O)O]⁻ (100).

Das hergestellte Silan gemäß Formel III) wird in eine erfindungsgemäße Kautschukmischung enthaltend wenigstens einen Dienkautschuk und wenigstens eine Kieselsäure als Füllstoff eingemischt. Bevorzugt wird das Silan gemäß Formel III) hierzu zuvor auf eine Kieselsäure aufgezogen und anschließend in dieser Form der Kautschukmischung zugegeben.

Das Aufziehen auf Kieselsäure erfolgt z. B. folgendermaßen:
Zu einer Suspension von Kieselsäure, z. B. granulierter Kieselsäure, in DMF wird bei Raumtemperatur eine Lösung des Silans gemäß Formel III) in dem gewünschten Verhältnis Kieselsäure / Silan gelöst in DMF gegeben. Beispielsweise werden Kieselsäure (VN3, Firma Evonik) und bis zu 19,7 phf des Silans gemäß Formel III) verwendet.

Die entstehende Suspension wird beispielsweise über Nacht bei 120 °C gerührt und anschließend wird das Lösungsmittel unter vermindertem Druck entfernt. Nach einem Tag Trocknen am Hochvakuum bei 40 °C wird die so erhaltene modifizierte Kieselsäure ggf. je nach gewünschter Feinheit mittels Mörser zerkleinert. Anschließend wird beispielsweise einen weiteren Tag bei 40 °C am Hochvakuum getrocknet.

Die erfindungsgemäße Kautschukmischung wird beispielsweise in Form eines vorgeformten Laufstreifens eines Fahrzeugreifens (wie oben beschrieben) auf einen Reifenrohling aufgebracht und anschließend mit diesem vulkanisiert.

Die Erfindung soll weiterhin anhand von Vergleichs- und Ausführungsbeispielen von Kautschukmischungen, die in Tabelle 1 zusammengefasst sind, näher erläutert werden. Die Vergleichsmischungen sind mit V, die erfindungsgemäßen Mischungen sind mit E gekennzeichnet. Die Mengenangabe der Silane in phf bezieht sich die jeweilige Menge an Kieselsäure.

Die Mischungsherstellung erfolgte unter üblichen Bedingungen in mehreren Stufen in einem Doppelschneckenextrusionsmischer. Aus sämtlichen Mischungen wurden Prüfkörper durch Vulkanisation hergestellt und mit diesen Prüfkörpern für die Kautschukindustrie typische Materialeigenschaften bestimmt.

Für die beschriebenen Tests an Prüfkörpern wurden folgende Testverfahren angewandt:
- Norm: ISO 6502, ASTM D5289; minimales Drehmoment am niedrigsten Punkt der Vulkanisationskurve gemessen mittels MDR (Moving Die Rheometer).
- Norm: ISO 868, DIN 53 505; Shore-A-Härte bei Raumtemperatur und 70 °C.
- Norm: ISO 4662, DIN 53 512; Rückprallelastizität bei Raumtemperatur.
- Norm: ISO 37, ASTM D 412, DIN 53 504; Reißdehnung bei Raumtemperatur und Bruchenergiedichte bei Raumtemperatur bestimmt im Zugversuch, wobei die Bruchenergiedichte die bis zum Bruch erforderliche Arbeit, bezogen auf das Volumen der Probe, ist.
- Norm: DIN 53 513; Dynamischer Speichermodul bei 0.15% Dehnung (E'(0.15%)) aus dynamisch-mechanischer Messung bei 55 °C.

**Tabelle 1**

| **Bestandteile** | **Einheit** | **V1** | **E1** | **E2** |
|---|---|---|---|---|
| NR TSR a) | phr | 10 | 10 | 10 |
| BR b) | phr | 18 | 18 | 18 |
| SSBR c) | phr | 72 | 72 | 72 |
| Kieselsäure d) | phr | 85 | 85 | 85 |
| Silan NXT e) | phf | 10.2 | - | - |
| Silan gemäß Formel III e) | phf | - | 19.6 | 9.8 |
| TDAE | phr | 35 | 35 | 35 |
| ZnO | phr | 2.5 | 2.5 | 2.5 |
| Weitere Zusatzstoffe f) | phr | 6.5 | 6.5 | 6.5 |
| DPG | phr | 2 | 2 | 2 |
| CBS | phr | 2 | 2 | 2 |
| Schwefel | phr | 2 | 2 | 2 |

| **Physikalische Messwerte** | **Einheit** | | | |
|---|---|---|---|---|
| ML | dNm | 4.9 | 2.1 | 1.9 |
| Shore A- Härte RT | ShA | 63.4 | 66.4 | 59.7 |
| Shore A- Härte 70 °C | ShA | 62.2 | 61 | 59.1 |
| Rückprallelastizität RT | % | 36.3 | 26.6 | 29.9 |
| Reißdehnung RT (S3) | % | 244 | 491 | 613 |
| Bruchenergiedichte (S3) | J/cm³ | 13 | 29 | 39 |
| Dynamischer Speichermodul (E'(0.15%)) 55 °C | MPa | 10.5 | 10.1 | 10.8 |

| | | | | |
|---|---|---|---|---|
| a) NR TSR: Naturkautschuk. b) BR: Polybutadien: Europrene Neocis BR 40, Fa. Polimeri. c) SSBR: lösungspolymerisiertes Styrol-Butadien-Copolymer aus dem Stand der Technik mit Hydroxy-Gruppen, Nipol^{®} NS 612, Fa. Zeon Corporation. d) Kieselsäure: VN3, Fa. Evonik. e) Silan wurde jeweils in der entsprechenden Menge (50% und 100% äquimolarer Ersatz zur Referenz NXT, 3-(Octanoylthio)-1-propyl-triethoxysilan, Fa. Momentive) mit der genannten Kieselsäure in einem separaten Schritt vorsilanisiert / zur Reaktion gebracht. Kieselsäure und Silan wurden zusammen als modifizierter Füllstoff dem Mischprozess zugeführt. f) Weitere Zusatzstoffe: Alterungsschutzmittel / Ozonschutzmittel / Stearinsäure. | | | | |

Die erfindungsgemäßen Rezepte E1 und E2 (enthaltend das erfindungsgemäße Silan gemäß Formel III)) zeigen im Vergleich mit der Referenzmischung V1 bei gleichem dynamischen Speichermodul E'(0.15%) eine verringerte Rückprallelastizität RT. Diese Eigenschaften zeigen dem Fachmann eine Verbesserung des Gripverhaltens in der Reifenanwendung. Während V1 und E1 eine annähernd gleiche Shore A-Härte bei RT und 70 °C besitzen, ist bei E2 eine Verringerung dieser Werte zu beobachten. Weiterhin lassen die erhöhte Reißdehnung und Bruchenergiedichte auf eine verbesserte Haltbarkeit und Reißfestigkeit schließen. Zudem wird bei E1 und E2 durch ein verringertes S' für ML eine verbesserte Prozessierbarkeit erwartet. Diese Eigenschaften zeigen deutlich den Vorteil der erfindungsgemäßen Silane gegenüber dem Stand der Technik.

## Patentansprüche

1. Silan gemäß Formel II):
II) ((R¹)ₒSi-R^{Z}-X-R²-)₂Y-R²-S-R³
wobei o = 3 ist und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, r eine ganze Zahl von 1 bis 30 ist, und R⁵ unsubstituierte oder substituierte, verzweigte oder unverzweigte, terminale Alkyl-, Alkenyl-, Aryl- oder Aralkylgruppen sind
oder
zwei R¹ bilden eine cyclische Dialkoxygruppe mit 2 bis 10 Kohlenstoffatomen, oder es können zwei oder mehr Silane gemäß Formel II) über Reste R¹ verbrückt sein; und
wobei die Reste R² unabhängig voneinander gleich oder verschieden sein können und lineare Alkylenreste mit 1 bis 20 Kohlenstoffatomen sind; und
wobei die Gruppe R³ ein Wasserstoffatom oder eine -C(=O)-R⁴ Gruppe oder eine -SiR⁸₃-Gruppe ist, wobei R⁴ und R⁸ ausgewählt sind aus C₁-C₂₀-Alkylgruppen, C₄-C₁₀-Cycloalkylgruppen, C₆-C₂₀-Arylgruppen, C₂-C₂₀-Alkenylgruppen und C₇-C₂₀-Aralkylgruppen und R⁸ zusätzlich aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen ausgewählt ist;
und wobei Y ein trivalentes Stickstoffatom (N) ist;
und wobei die Gruppen X unabhängig voneinander gleich oder verschieden sein können und ausgewählt sind aus den Gruppen
-HNC(=O)-, -C(=O)NH-, -C(=O)O-, -OC(=O)-, -OC(=O)NH-,
-HNC(=O)O-, -HNC(=O)NH-,
und wobei das Silan auch in Form von Oligomeren vorliegen kann, die durch Hydrolyse und Kondensation von Silanen der Formel II) entstehen.

2. Silan nach einem der vorherigen Ansprüche, **dadurch gekennzeichnet, dass** die Reste R² lineare Alkylenreste mit 2 bis 10 Kohlenstoffatomen, besonders bevorzugt 2 bis 5 Kohlenstoffatomen sind.

3. Silan nach einem der vorherigen Ansprüche, **dadurch gekennzeichnet, dass** die Gruppe R³ eine -C(=O)-R⁴ Gruppe ist, wobei R⁴ ausgewählt ist aus C₁-C₂₀-Alkylgruppen, bevorzugt C₁-C₇-Alkylgruppen.

4. Silan nach einem der vorherigen Ansprüche **dadurch gekennzeichnet, dass** die Reste R¹ unabhängig voneinander gleich oder verschieden sind und Alkoxygruppen mit 1 bis 6 Kohlenstoffatomen oder Halogenide sind.

5. Silan nach einem der vorherigen Ansprüche, **dadurch gekennzeichnet, dass** die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, sind.

6. Silan nach einem der vorherigen Ansprüche, **dadurch gekennzeichnet, dass** X eine -OC(=O)NH- oder -HNC(=O)O-Gruppe ist.

7. Silan nach Anspruch 1, **dadurch gekennzeichnet, dass** es die folgende Formel III) aufweist:

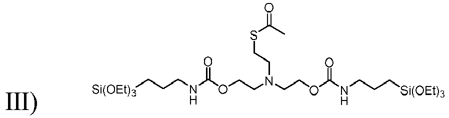

8. Kieselsäure, die mit wenigstens einem Silan nach einem der Ansprüche 1 bis 7 zumindest an deren Oberfläche modifiziert ist.

9. Kautschukmischung enthaltend wenigstens ein Silan nach einem der Ansprüche 1 bis 7 und/oder wenigstens eine Kieselsäure nach Anspruch 8.

10. Fahrzeugreifen, der die Kautschukmischung nach Anspruch 9 in wenigstens einem Bauteil aufweist.

11. Verfahren zur Herstellung eines Silanes nach Formel II)-a),
II)-a) ((R¹)ₒSi-R²-(H)NC(=O)O-R²)₂-N-R²-S-R³ ,
wobei das Verfahren wenigstens folgende Verfahrensschritte umfasst:
a) Bereitstellung einer Substanz (R¹)ₒSi-R²-N=C=O ;
b) Bereitstellung einer Substanz (HO-R²)₃N ;
c) Umsetzung von zwei Äquivalenten der Substanz aus Schritt a) mit der Substanz aus Schritt b) zu ((R¹)ₒSi-R²-(H)NC(=O)O-R²-)₂N-R²-OH;
d) Bereitstellung einer Substanz R³-SH ;
e) Umsetzung von einem Äquivalent der Substanz aus Schritt c) mit einem Äquivalent der Substanz aus Schritt d) zu
II)-a) ((R¹)ₒSi-R²-(H)NC(=O)O-R²)₂-N-R²-S-R³ ;
f) Optional Aufreinigung des in Schritt e) erhaltenen Silans,
wobei R¹, R² und R³ sowie o wie für Anspruch 1 definiert sind.

## Claims

1. Silane according to formula II):
II) ((R¹)ₒSi-R²-X-R²-)₂Y-R²-S-R³
wherein o = 3 and the radicals R¹ may independently of one another be identical or different and are selected from alkoxy groups having 1 to 10 carbon atoms, cycloalkoxy groups having 4 to 10 carbon atoms, phenoxy groups having 6 to 20 carbon atoms, aryl groups having 6 to 20 carbon atoms, alkyl groups having 1 to 10 carbon atoms, alkenyl groups having 2 to 20 carbon atoms, alkynyl groups having 2 to 20 carbon atoms, aralkyl groups having 7 to 20 carbon atoms, halides or
alkyl polyether groups -O-(R⁶-O)ᵣ-R⁵, wherein R⁶ are identical or different and are branched or unbranched, saturated or unsaturated, aliphatic, aromatic or mixed aliphatic/aromatic bridging C₁-C₃₀ hydrocarbon groups, r are an integer from 1 to 30 and R⁵ are unsubstituted or substituted, branched or unbranched, terminal alkyl, alkenyl, aryl or aralkyl groups
or
two R¹ form a cyclic dialkoxy group having 2 to 10 carbon atoms or two or more silanes according to formula II) may be bridged via radicals R¹; and
wherein the radicals R² may independently of one another be identical or different and are linear alkylene groups having 1 to 20 carbon atoms; and
wherein the group R³ is a hydrogen atom or a -C(=O)-R⁴ group or a -SiR⁸₃-group, wherein R⁴ and R⁸ are selected from
C₁-C₂₀ alkyl groups, C₄-C₁₀ cycloalkyl groups, C₆-C₂₀ aryl groups, C₂-C₂₀ alkenyl groups, and C₇-C₂₀ aralkyl groups and R⁸ is additionally selected from alkoxy groups having 1 to 10 carbon atoms, cycloalkoxy groups having 4 to 10 carbon atoms, phenoxy groups having 6 to 20 carbon atoms;
and wherein Y is a trivalent nitrogen atom (N);
and wherein the groups X may independently of one another be identical or different and are selected from the groups
-HNC(=O)-, -C(=O)NH-, -C(=O)O-, -OC(=O)-, -OC(=O)NH-, -HNC(=O)O-,-HNC(=O)NH-,
and wherein the silane may also be in the form of oligomers formed by hydrolysis and condensation of silanes of formula II).

2. Silane according to the preceding claim, **characterized in that** the radicals R² are linear alkylene radicals having 2 to 10 carbon atoms, particularly preferably 2 to 5 carbon atoms.

3. Silane according to either of the preceding claims, **characterized in that** the group R³ is a -C(=O)-R⁴ group, wherein R⁴ is selected from C₁-C₂₀ alkyl groups, preferably C₁-C₇ alkyl groups.

4. Silane according to any of the preceding claims, **characterized in that** the radicals R¹ are independently of one another identical or different and are alkoxy groups having 1 to 6 carbon atoms or halides.

5. Silane according to any of the preceding claims, **characterized in that** the radicals R¹ within a silyl group (R¹)ₒSi- are identical and are alkoxy groups having 1 or 2 carbon atoms, i.e. methoxy groups or ethoxy groups, very particularly preferably ethoxy groups.

6. Silane according to any of the preceding claims, **characterized in that** X is an - OC(=O)NH- or -HNC(=O)O- group.

7. Silane according to Claim 1, **characterized in that** it has the following formula III):

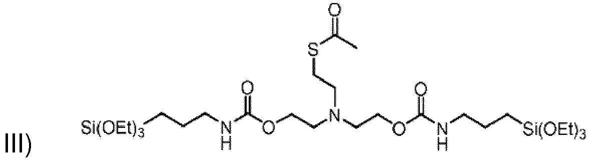

8. Silica modified with at least one silane according to any of Claims 1 to 7 at least at its surface.

9. Rubber mixture containing at least one silane according to any of Claims 1 to 7 and/or at least one silica according to Claim 8.

10. Vehicle tyre comprising the rubber mixture according to Claim 9 in at least one component.

11. Process for producing a silane according to formula II)-a),
II-a) ((R¹)ₒSi-R²-(H)NC(=O)O-R²-)₂-N-R²-S-R³
wherein the process comprises at least the following process steps:
a) providing a substance (R¹)ₒSi-R²-N=C=O;
b) providing a substance (HO-R²)₃N;
c) reacting two equivalents of the substance from step a) with the substance from step b) to afford ((R¹)ₒSi-R²-(H)NC(=O)O-R²-)₂N-R²-OH;
d) providing a substance R³-SH;
e) reacting one equivalent of the substance from step c) with one equivalent of the substance from step d) to afford
II-a) ((R¹)ₒSi-R²-(H)NC(=O)O-R²-)₂-N-R²-S-R³
f) optionally purifying the silane obtained in step e),
wherein R¹, R² and R³ and also o are as defined for Claim 1.

## Revendications

1. Silane selon la formule II) :
II) ((R¹)ₒSi-R²-X-R²-)₂Y-R²-S-R³
dans laquelle o = 3 et les radicaux R¹ peuvent être, indépendamment les uns des autres, identiques ou différents les uns des autres et sont choisis parmi des groupes alcoxy ayant 1 à 10 atomes de carbone, des groupes cycloalcoxy ayant 4 à 10 atomes de carbone, des groupes phénoxy ayant 6 à 20 atomes de carbone, des groupes aryle ayant 6 à 20 atomes de carbone, des groupes alkyle ayant 1 à 10 atomes de carbone, des groupes alcényle ayant 2 à 20 atomes de carbone, des groupes alcynyle ayant 2 à 20 atomes de carbone, des groupes aralkyle ayant 7 à 20 atomes de carbone, des halogénures
ou
des groupes alkylpolyéther -O-(R⁶-O)ᵣ-R⁵ dans lesquels R⁶ sont identiques ou différents et sont des groupes hydrocarbonés en C₁-C₃₀ ramifiés ou non ramifiés, saturés ou insaturés, aliphatiques, aromatiques ou mixtes aliphatiques/aromatiques pontants, r est un nombre entier de 1 à 30, et R⁵ sont des groupes terminaux alkyle, alcényle, aryle ou aralkyle substitués ou non substitués, ramifiés ou non ramifiés
ou
deux R¹ forment un groupe dialcoxy cyclique ayant 2 à 10 atomes de carbone,
ou deux ou plusieurs silanes selon la formule II) peuvent être pontés par l'intermédiaire de radicaux R¹ ; et
dans laquelle les radicaux R² peuvent être, indépendamment les uns des autres, identiques ou différents et sont des radicaux alkyle linéaires ayant 1 à 20 atomes de carbone ; et
dans laquelle le groupe R³ est un atome d'hydrogène ou un groupe -C(=O)-R⁴ ou un groupe -SiR⁸₃-, R⁴ et R⁸ étant choisis parmi des groupes alkyle en C₁-C₂₀, des groupes cycloalkyle en C₄-C₁₀, des groupes aryle en C₆-C₂₀, des groupes alcényle en C₂-C₂₀ et des groupes aralkyle en C₇-C₂₀ et R⁸ est en outre choisi parmi des groupes alcoxy ayant 1 à 10 atomes de carbone, des groupes cycloalcoxy ayant 4 à 10 atomes de carbone, des groupes phénoxy ayant 6 à 20 atomes de carbone ; et dans laquelle Y est un atome d'azote trivalent (N) ;
et dans laquelle les groupes X peuvent être, indépendamment les uns des autres, identiques ou différents et sont choisis parmi les groupes
-HNC(=O)-, -C(=O)NH-, -C(=O)O-, -OC(=O)-, -OC(=O)NH-,
-HNC(=O)O-, -HNC(=O)NH-,
et dans laquelle le silane peut également se présenter sous forme d'oligomères qui sont formés par hydrolyse et condensation de silanes de formule (II).

2. Silane selon l'une quelconque des revendications précédentes, **caractérisé en ce que** les radicaux R² sont des radicaux alkyle linéaires ayant 2 à 10 atomes de carbone, particulièrement préférablement 2 à 5 atomes de carbone.

3. Silane selon l'une quelconque des revendications précédentes, **caractérisé en ce que** le groupe R³ est un groupe -C(=O)-R⁴, dans lequel R⁴ est choisi parmi des groupes alkyle en C₁-C₂₀, de préférence des groupes alkyle en C₁-C₇.

4. Silane selon l'une quelconque des revendications précédentes, **caractérisé en ce que** les radicaux R¹ sont, indépendamment les uns des autres, identiques ou différents et sont des groupes alcoxy ayant 1 à 6 atomes de carbone ou des halogénures.

5. Silane selon l'une quelconque des revendications précédentes, **caractérisé en ce que** les radicaux R¹ dans un groupe silyle (R¹)ₒSi- sont identiques et sont des groupes alcoxy ayant 1 ou 2 atomes de carbone, donc des groupes méthoxy ou des groupes éthoxy, tout particulièrement préférablement des groupes éthoxy.

6. Silane selon l'une quelconque des revendications précédentes, **caractérisé en ce que** X est un groupe -OC(=O)NH- ou -HNC(=O)O-.

7. Silane selon la revendication 1, **caractérisé en ce qu'**il présente la formule III) suivante :

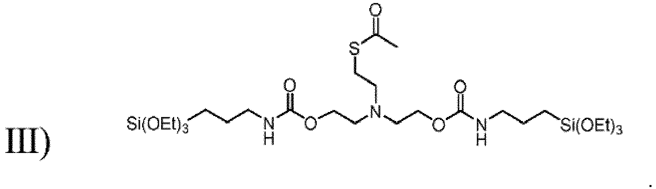

8. Silice qui est modifiée au moins au niveau de sa surface par au moins un silane selon l'une quelconque des revendications 1 à 7.

9. Mélange caoutchouteux contenant au moins un silane selon l'une quelconque des revendications 1 à 7 et/ou au moins une silice selon la revendication 8.

10. Pneumatique de véhicule qui présente le mélange caoutchouteux selon la revendication 9 dans au moins un élément.

11. Procédé de production d'un silane de formule II)-a),
II)-a) ((R¹)ₒSi-R²-(H)NC(=O)O-R²)₂-N-R²-S-R³,
le procédé comprenant au moins les étapes de procédé suivantes :
a) la fourniture d'une substance (R¹)ₒSi-R²-N=C=O ;
b) la fourniture d'une substance (HO-R²)₃N ;
c) la réaction de deux équivalents de la substance de l'étape a) avec la substance de l'étape b) pour obtenir ((R¹)ₒSi-R²-(H)NC(=O)O-R²-)₂N-R²-OH ;
d) la mise à disposition d'une substance R³-SH ;
e) la réaction d'un équivalent de la substance de l'étape c) avec un équivalent de la substance de l'étape d) pour obtenir
II)-a) ((R¹)ₒSi-R²-(H)NC(=O)O-R²)₂-N-R²-S-R³ ;
f) l'éventuelle purification du silane obtenu à l'étape e),
dans laquelle R¹, R² et R³ ainsi que o sont tels que définis dans la revendication 1.
